# EUROPEAN PATENT SPECIFICATION

(11) **EP 2 277 658 B1**
(45) Date of publication and mention of the grant of the patent: **14.08.2013**
(21) Application number: 10170034.2
(22) Date of filing: 19.07.2010
(51) Int. Cl.: B23Q 3/157, B23Q 7/04

(54) **Lathe with tool turret and automatic tool changing device for the turret**
Drehmaschine mit Werkzeugrevolver und Vorrichtung zum automatischen Werkzeugwechsel im Revolver
Tour avec tourelle revolver et avec un dispositif automatique de changement d'outil dans le revolver

(30) Priority: 17.07.2009 IT TO20090538
(43) Date of publication of application: 26.01.2011
(73) Proprietor: Famar S.r.l., 10051 Avigliana (Torino) (IT)
(72) Inventor: Marinello, Federico, 10094 Valgioie (Torino) (IT); Marinello, Fausto, 10094 Valgioie (Torino) (IT)
(74) Representative: Rondano, Davide

(56) References cited:
- DE-A1- 3 416 660
- GB-A- 2 307 431
- JP-A- 56 027 755
- US-A- 4 702 650

## Description

The present invention relates to a numerically controlled lathe, especially but not necessarily an inverted-spindle vertical lathe, with an automatic workpiece loading/unloading device as well as with an automatic tool changing device arranged to perform automatically, i.e. without the need for the operator's assistance, all the tool changing operations that become necessary during the operation of the lathe, either during the performance of a given work cycle on a batch of workpieces to replace worn tools with new tools, or when preparing for a new work cycle to replace all or some of the tools used in the previous work cycle with those required for the new work cycle.

Numerically controlled lathes with automatic workpiece loading/unloading devices, such as in particular inverted-spindle vertical lathes, are nowadays commonly used because they have the great advantage of having a work spindle capable of performing both the movements of the workpiece during machining (cutting stroke and feed stroke) and the workpiece loading and unloading operations, without the need to provide special workpiece holding and manipulating members, such as manipulator arms. The work spindle is in fact generally mounted on a cross slide capable of translating along at least two perpendicular directions, in particular a vertical direction and a horizontal direction (plus optionally a further horizontal direction perpendicular to the other horizontal direction), the work spindle being operated to move between a work area, where the work spindle cooperates with a tool holding turret to perform the programmed work cycle, and a loading/unloading area, where the work spindle is able to unload the machined workpiece and load a new workpiece. By "loading/unloading area" is meant, for the purposes of the present invention, any area of the lathe remote from the work area in which are performed not only the workpiece loading/unloading operations, but also all those accessory operations that may become necessary during the work cycle or between one work cycle and the next, such as for example operations of measuring the workpiece, cleaning the workpiece, etc.

At the moment, the tool changing operation, whether due to the tool in use becoming worn or whether to replace it with a tool of a different kind, requires stopping the machining process for what may be a long or short period of time but which in all cases results in an increase in the total duration of the work cycle and/or in an increase in the machine downtime, and therefore in a reduction of the productivity of the lathe. Time lost due to stopping machining to carry out tool changing operations normally varies between 5% and 20% of the entire life of a lathe, so its impact on the profitability or efficiency of the machine is far from negligible.

DE 34 16 660 A I discloses a numerically controlled lathe comprising: a tool holding turret arranged to carry a plurality of tools; an automatic workpiece loading/unloading device including a work spindle movable between a work area, in which it is located near the tool holding turret, and a loading/unloading area remote from the work area, in which it is located remote from the tool holding turret to unload the machined workpiece and to load a new workpiece to be machined; an automatic tool changing device arranged to automatically replace on each occasion one of the tools carried by the tool holding turret with a new tool; and a programmable electronic control unit arranged to control the tool holding turret, the automatic workpiece loading/unloading device and the automatic tool changing device.

GB 2 307 431 discloses a tool holding turret comprising: a motorized tool holding body which is mounted rotatably about a first, fixed axis of rotation and has a plurality of tool seats; a plurality of tool holding cartridges, each carrying a rotating tool and each housed in a respective tool seat in the tool holding body; first motor means arranged to rotate the tool holding body; second motor means arranged to rotate about a second, fixed axis of rotation a rotating tool carried by a tool holding cartridge housed in one of the tool seats of the tool holding body when said tool is arranged with its axis aligned with the second axis of rotation; and a single tightening clamp operated by an actuation rod to lock or release a tapered portion of a tool holding cartridge.

It is therefore an object of the present invention to provide a numerically controlled lathe with an automatic workpiece loading/unloading device and with an automatic tool changing device, which is able, without requiring interruptions to the machining process specifically intended to tool replacement, to automatically perform the tool changing operations, and hence in such a way that the tool changing operations do not reduce the profitability or efficiency of the lathe.

This object, and others, are achieved according to the present invention by means of a numerically controlled lathe having the features defined in the accompanying independent claim 1.

Advantageous embodiments of the present invention are defined in the dependent claims, the content of which is to be regarded as an integral and integrating part of the following description.

Briefly, the invention is based on the idea of providing a numerically controlled lathe with an automatic workpiece loading/unloading device and with an automatic tool changing device associated to the tool holding turret, in which the automatic tool changing device is arranged to perform the tool changing operations, particularly the replacement of a worn tool with a new tool, in the time interval in which the work spindle is moved from the work area to the loading/unloading area to perform the workpiece loading/unloading operation, and then returned to the work area. Whenever the work cycle on a given workpiece is completed, in the time interval in which the work spindle is moved away from the work area and brought to the loading/unloading area, the tool changing device replaces, if necessary, every tool that is worn and therefore requires replacement with a new tool. In this way, tool changing operations are performed making use of the necessary time intervals in which machining is stopped to unload the machined workpiece and load a new workpiece, and therefore no longer constitute non-machining times which would negatively impact the total duration of the work cycle and finally the profitability or efficiency of the lathe. The lathe can therefore operate without additional interruptions to machining caused by tool replacement.

The programmable electronic control unit that controls the operation of the lathe is preferably arranged to count the time (or the number of cycles) for which each of the tools mounted on the tool holding turret has been used, and whenever one or more of the tools has reached a given maximum use time (or number of cycles), commands that tool (or those tools) to be replaced, the replacement being carried out, as indicated earlier, automatically during the workpiece loading and unloading operation or during any auxiliary operation on the workpiece. In this connection, the mere fact that non-machining times (workpiece loading and unloading operations) are used for tool changing means that the life of each tool can be used to its maximum. Current practice is for tools to be replaced in groups to ensure that the necessary non-machining time required for tool changing operations is as short as possible, but this means that some tools are inevitably replaced before they really need to be, i.e. before the tool has reached a use time or number of cycles corresponding to its useful life. By contrast, in a lathe according to the invention, tools can be replaced independently of each other. It is therefore no more required to anticipate replacement of one or more tools to perform this operation at the same time as other tools. Instead, each tool is replaced only when the amount of time (or number of cycles) for which that tool has been used has reached a given value corresponding to the useful life of that tool. This further improves the economic profitability of the use of a lathe according to the invention as compared with existing lathes.

Another advantageous aspect of the invention, which can also be provided separately from the first aspect mentioned above, is the use of a rotary drum-type tool holding turret fitted with an automatic tool release system capable of operating with both stationary and rotating tools.

Other features and advantages of the invention will become clear in the course of the following detailed description, given purely by way of non-limiting example, with reference to the appended drawings, in which:
Figures 1, 2 and 3 are a side elevation view, a front elevation view and a plan view, respectively, of a numerically controlled lathe with an automatic workpiece loading/unloading device and with an automatic tool changing device according to a preferred embodiment of the present invention;
Figure 4 is a partly exploded perspective view of a tool holding turret that is advantageously usable in a numerically controlled lathe according to the present invention;
Figure 5 is a view of the turret of Figure 4 in section on a plane perpendicular to the axis of rotation of the rotary tool holding body of the turret;
Figure 6 is a view of the turret of Figure 4 in section on a vertical plane passing through the axis of rotation of the rotary tool holding body of the turret; and
Figure 7 is a view of the turret of Figure 1 in section on a horizontal plane passing through the axis of rotation of the rotary tool holding body of the turret.

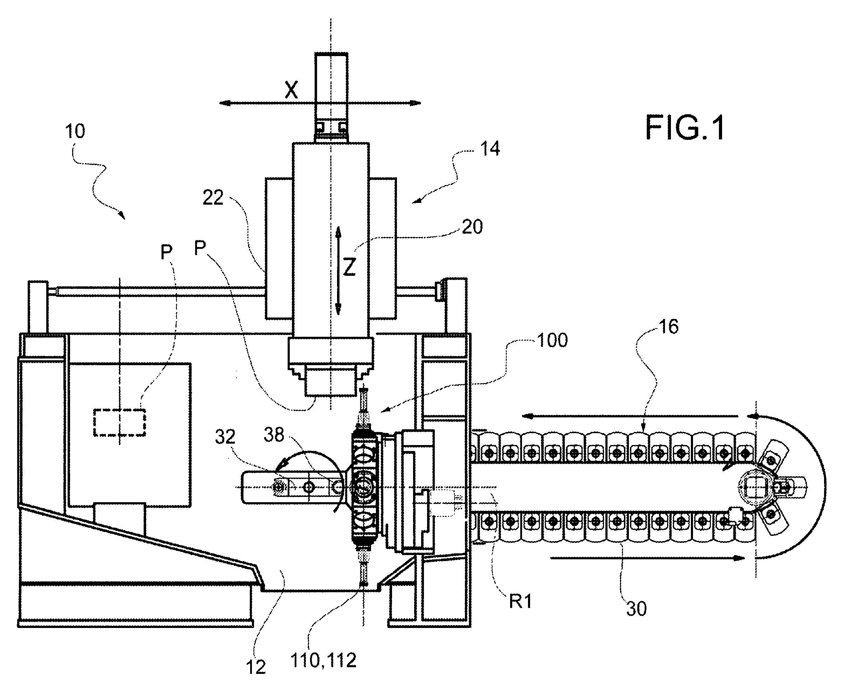

Referring initially to Figures 1 to 3, a numerically controlled lathe is generally indicated 10 and fundamentally comprises a bed 12, an automatic workpiece loading/unloading device 14, an automatic tool changing device 16 and a rotary tool holding turret 100.

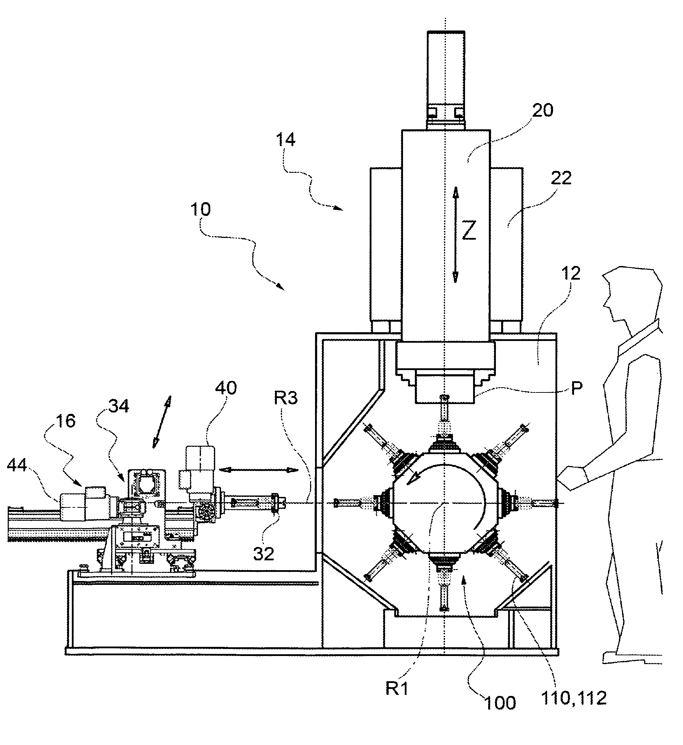

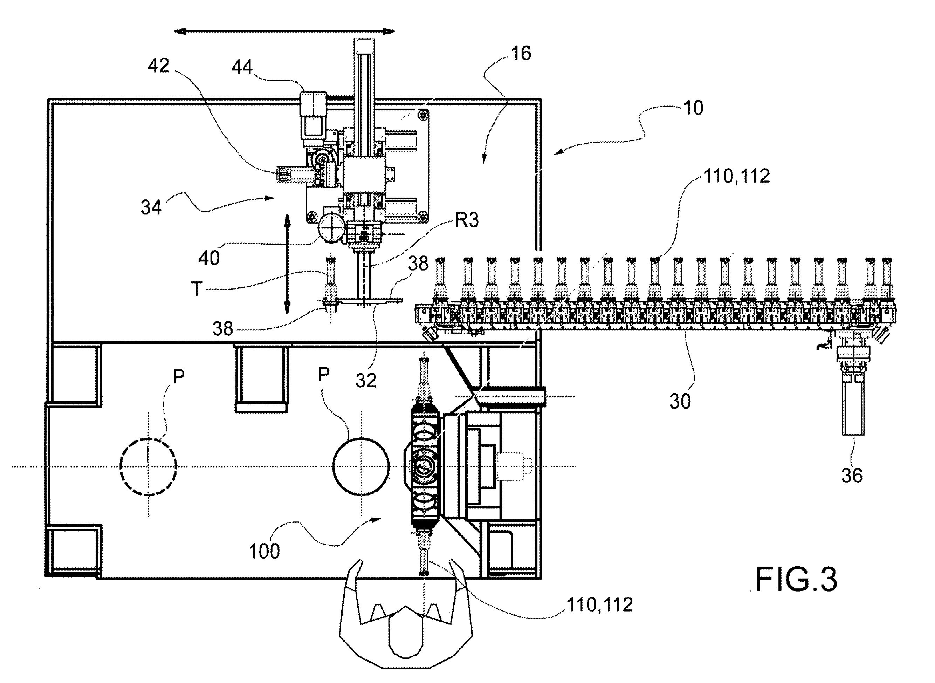

In the example illustrated, the lathe 10 is a vertical lathe in which the automatic workpiece loading/unloading device 14 comprises a work spindle 20 that is rotatable about a vertical axis (indicated Z in Figures 1 and 2) and extending down towards the work area, that is towards the rotary tool holding turret 100. The automatic workpiece loading/unloading device 14 also comprises a cross slide 22 carried by the bed 12 in such a way as to be able to translate both vertically (Z axis) and in a horizontal direction (indicated X in Figure 1). The work spindle 20 is therefore able to perform both the cutting and feed movements required to carry out turning operations on a workpiece P, and to move a machined workpiece P from the work area (the position shown in solid lines in Figures 1, 2 and 3) to the loading/unloading area (the position shown in dashed lines in Figures 1 and 3), and the next workpiece from the loading/unloading area to the work area.

As will be clear from the following description, although the invention is described and illustrated herein with reference to a vertical lathe, it can clearly also be applied to a horizontal lathe, provided it has an automatic workpiece loading/unloading device, that is has a work spindle capable of picking up a workpiece and moving it to the work area, and carrying a machined workpiece from the work area to the loading/unloading area to deposit it for example on a conveyor belt.

The constructional features of the work spindle 20 (relating for example to the clamping device and to the associated rotary actuating unit), and of the cross slide 22 on which the work spindle 20 is mounted are known per se and will therefore not be explained in detail in the present description.

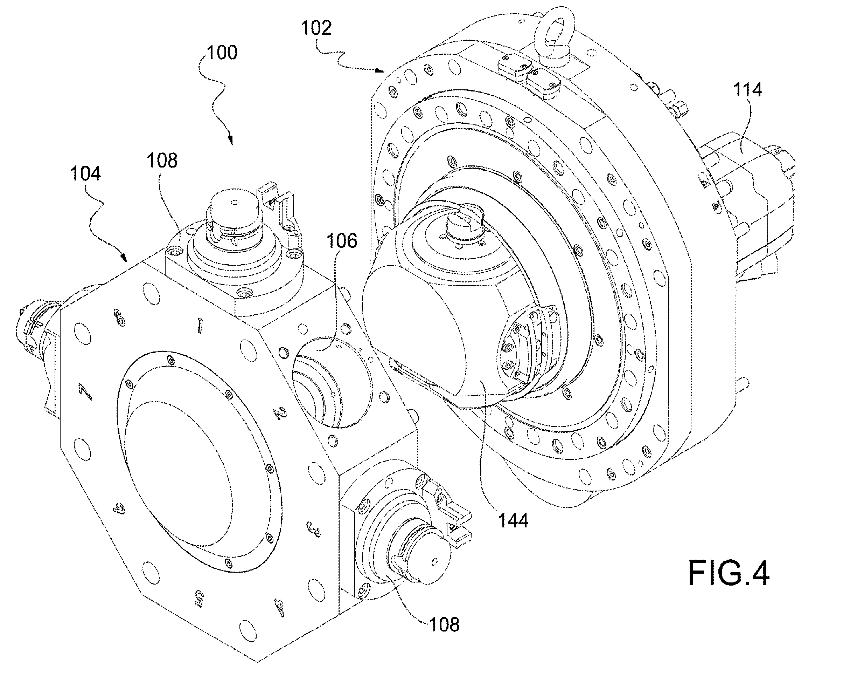

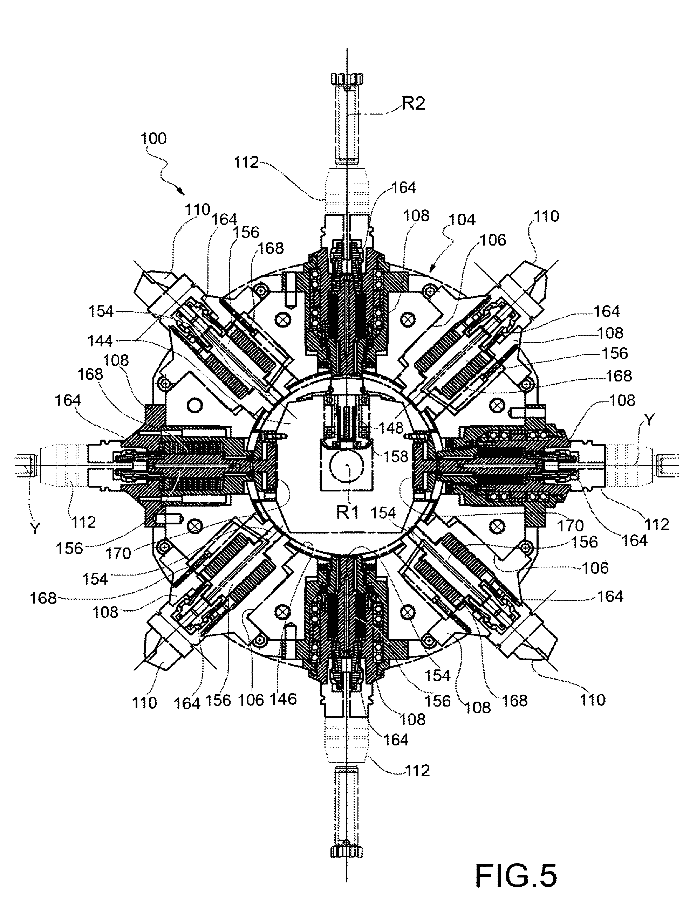

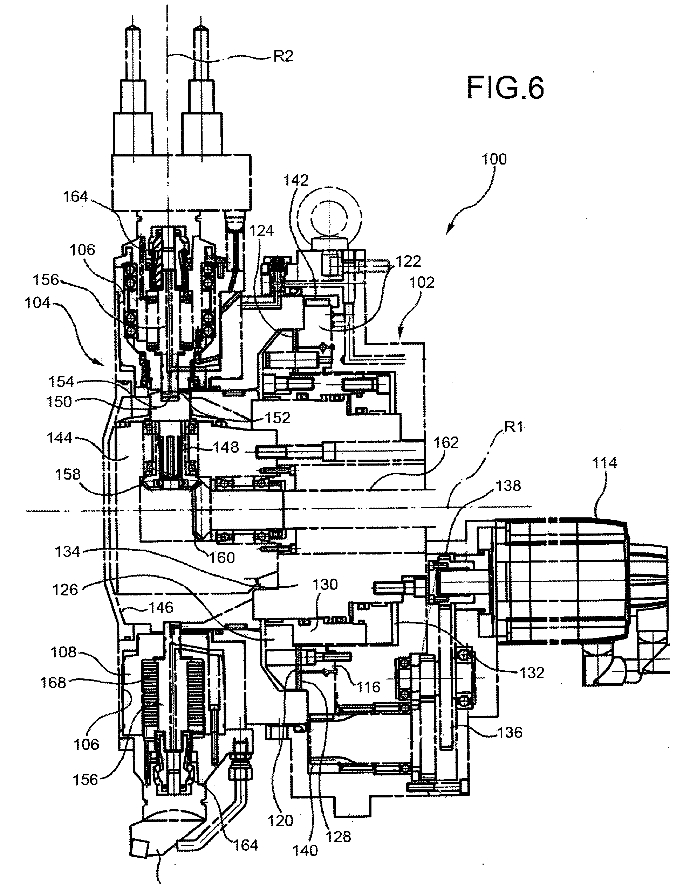

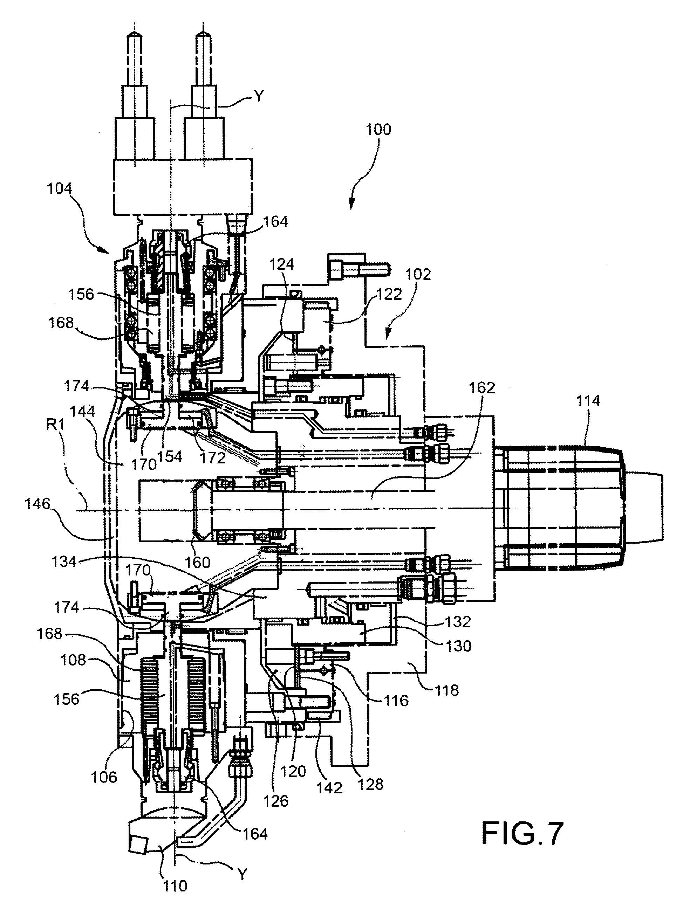

Referring now particularly to Figures 4 to 7, the rotary tool holding turret 100 fundamentally comprises a stationary supporting body 102 mounted on the lathe and a rotary tool holding body 104 supported rotationally by the stationary supporting body 102 about a first, fixed axis of rotation R1 (which in the example illustrated is a horizontal axis parallel to the horizontal X axis along which the work spindle 20 moves, but which could also be a vertical axis) and having a plurality of radial seats 106 (which could however alternatively be axial seats, that is seats oriented with their axis parallel to the first axis of rotation R1), each of which accommodates a respective tool holding cartridge 108 carrying a fixed tool 110 or a rotating tool 112 (the rotating tools being usable where operations besides those of turning have to be performed). Although the example illustrated shows the turret 100 with eight radial seats 106, the number of radial seats can of course be varied to suit the specific requirements of the end user of the lathe.

The rotation of the rotary tool holding body 104 about the first axis of rotation R1 is driven by a first motor 114 (which may be an electric motor or a hydraulic motor) mounted on the stationary body 102, via an indexing mechanism comprising three coaxial toothed rings which will now be described in detail. The indexing mechanism comprises a first, stationary toothed ring 116 whose axis coincides with the first axis of rotation R1, which ring is fixed to a first, radially outer element 116 of the stationary body 102 and has a first set of front teeth 120, a second, rotating toothed ring 122, which is located around and coaxial with the first ring 116 and has a second set of front teeth 124 in the same plane as the first set of front teeth 120, and a third, non-rotating toothed ring 126, which is coaxial with the first two rings 116 and 122 and has a third set of front teeth 128 facing the first two sets of front teeth 120 and 124. The third toothed ring 126 is fixed to an annular hydraulic piston 130 which is axially slidable inside an annular chamber 132 defined between the first, radially outer element 116 of the stationary body 102 and a second, radially inner element 134 of the stationary body 102. The hydraulic piston 130 is driven for translation in both directions by pressurized fluid in such a way as to move the third toothed ring 126 attached to it between a first position (shown in Figures 3 and 4), where the front teeth 128 of the third toothed ring 126 mesh with the front teeth 120 and 124 of the first and second toothed rings 116 and 122, thus locking the second toothed ring 122, and a second position, where the front teeth 128 of the third toothed ring 126 are disengaged from the front teeth 120 and 124 of the first and second toothed rings 116 and 122 and as a result the second toothed ring 122 can be rotated by the electric motor 114. The front teeth 120, 124 and 128 of the three toothed rings 116, 122 and 126 are preferably Hirth teeth.

Between the motor 114 and the second rotating toothed ring 122 a gear reduction mechanism is interposed, which is generally indicated 134 and comprises an input gearwheel 136 meshing with a toothed pinion 138 fitted to the output shaft of the electric motor 114, and an output pinion 140 meshing with a ring gear 142 provided on the second rotating ring 122. The tool holding body 104 is fixed to the second rotating ring 122 and is therefore rotated by the electric motor 114 via the gear reduction mechanism 134, obviously when the hydraulic piston 130 is in the second position defined above. Once the tool holding body 104 has been moved by the electric motor 114 to the desired angular position, the hydraulic piston 130 is moved to the first position defined above to lock the tool holding body 104 in the angular position reached.

The turret 100 also includes a rotary actuating unit 144 which is fixed to the second, radially inner element 134 of the stationary body 102 and is housed in a cylindrical cavity 146 of the tool holding body 104. The rotary actuating unit 144 is arranged to rotate a rotating tool 110 about a second, fixed axis of rotation R2 lying in a plane perpendicular to the first axis of rotation R1, in the present case a vertical axis of rotation, when the axis of this tool is aligned with the second axis of rotation R2. The rotary actuating unit 144 comprises an output shaft 148 that is coaxial with the second axis of rotation R2 and carries, at its radially outer end, a drive member 150 having a female coupling element 152 (a front groove in the example illustrated) for engaging with an end portion 154, formed as a male coupling element, of a drive rod 156 (whose function will be explained later) for driving the tool holding cartridge 108. At its radially inner end, the output shaft 148 carries a bevel gear 158 meshing with a bevel gear 160 carried by an input shaft 162 which extends in the direction of the first axis of rotation R1 and is rotated by a dedicated second electric or hydraulic motor (not shown). In this way, when a rotating tool 110 carried by the tool holding body 104 is aligned with the axis of rotation R2 of the output shaft 148 of the rotary actuating unit 144, and the end portion 154 of its drive rod 156 is engaged with the female coupling element 152 of the drive member 150 carried by the output shaft 148 (the 12 o'clock position in the example illustrated), the tool 112 can be rotated by the second motor through the angle drive mechanism consisting of the input shaft 162, the bevel gear pair 158, 160 and the output shaft 148.

It is of course possible to envisage many other ways of making the rotary actuating unit. For instance, the second motor could be housed inside the rotary actuating unit with its output shaft aligned with or parallel to the second axis of rotation R2, so as to directly rotate the rotating tool without requiring an angle drive mechanism to transmit the motion from outside to inside the rotary actuating unit.

As stated earlier, the radial seats 106 provided in the tool holding body 102 can accommodate tool holding cartridges 108 that may carry either a fixed tool 110 (to be used to carry out for instance turning operations on a rotating workpiece) or a rotating tool 112 (to be used to carry out for instance drilling or milling operations on a stationary workpiece). Each cartridge 108 is provided with a tightening clamp 164 of per-se-known type, which in the example illustrated is a Berg-type clamp comprising a plurality of clamping members which are opened and closed like petals by the drive rod 156, which is slidably arranged in the direction of the axis of the cartridge between a normal working position, in which the clamping members of the clamp 164 are closed and therefore lock the tool 110 or 112, and a tool changing position, in which the clamping members of the clamp 164 are open and the tool 110 or 112 can therefore be extracted from the cartridge 108 to be replaced with a new tool of the same type or of another type. Resilient means, consisting in the example illustrated of a plurality of stacked Belleville springs 168, hold the drive rod 156 in the normal working position.

The turret 100 also includes at least one automatic tool release device arranged to open the clamp 164 of a tool holding cartridge 108 when the latter is in a given angular position in the rotational movement of the rotary tool holding body 104 about the first axis of rotation R1, and thus allow the tool 110 or 112 to be extracted from the tool holding cartridge 108. In the example illustrated, the turret comprises two automatic tool release devices which are aligned along an axis Y lying in the plane of rotation of the turret and perpendicular to the second axis of rotation R2 and which act in radially opposite directions. Each automatic tool release device basically comprises a hydraulic piston 170 which is slidably arranged in the direction of the Y axis in a respective cylindrical chamber 172 formed by the rotary actuating unit 144 and is provided with a strut 174 which extends in a radially outward direction. When pushed in a radially outward direction by supply of pressurized fluid, the hydraulic piston 170 pushes the drive rod 156, via the strut 174, from the normal working position to the tool changing position, acting against the biasing force of the springs 168. With the drive rod 156 in the tool changing position, the tool 110 or 112 is free to be extracted from the respective tool holding cartridge 108, either by the automatic tool changing device 16 or manually by the operator.

Due to the fact that the tool holding turret is able to hold a large number of tools (for instance up to twelve or sixteen tools, either fixed or rotating), in the vast majority of cases all the tools required to perform the entire work cycle, and to carry out, completely automatically, in combination with an automatic tool changing device (such as that shown at 16 in the figures and described below), any tool changing operation, the machine has not to be stopped to carry out tool changing operations and therefore the efficiency of the machine on which the turret is installed is maximized.

The automatic tool changing device 16 basically comprises a tool magazine 30, a tool changing clamp 32 and a driving unit 34. The tool magazine 30 in the example illustrated is made as a chain magazine which extends in a vertical plane parallel to the axis of rotation R1 of the tool holding body 104 of the turret 100, and the movement of which is controlled by a motor 36, such as an electric motor (Figure 3). The tool changing clamp 32 has a pair of tool seats 38, one designed to receive the old tool and other the new tool, and it is able to rotate about a horizontal axis of rotation R3 perpendicular to the axis of rotation R1 of the tool holding body 104 of the turret 100. A motor 40, such as an electric motor, is arranged to rotate the tool changing clamp 32 180° in order to position each time, in front of the tool seat 106 of the tool holding body 104 containing the tool to be replaced, in alternation, the tool seat 38 of the tool changing clamp 30 intended to take the old tool, and the tool seat 38 of the tool changing clamp 32 containing the new tool. The driving unit 34 on which the tool changing clamp 32 is mounted is made in the example illustrated as a cross slide that can translate along two perpendicular directions lying in the horizontal plane passing through the axis of rotation R1 of the tool holding body 104 of the turret 100, one parallel and the other perpendicular to this axis. Two motors 42 and 44, each of which may be either an electric motor or a hydraulic motor, are arranged to move the cross slide in the two directions defined above in order to move the tool changing clamp 32 between a tool loading/unloading position, in which it can pick up the new tool from the tool magazine 30, and a tool changing position, in which, in alternation, the tool seat 38 intended to receive the old tool and the tool seat 38 containing the new tool are presented to the tool seat 106 of the tool holding body 104 of the turret 100.

As in the prior art, the lathe 10 is provided with a programmable electronic control unit that in general manages the operation of the lathe and in particular controls:
- the motors (not shown in the figures) which drive the translational movements of the cross slides 22 in the two directions X and Z,
- the pickup device of the work spindle 20,
- the motor 28 that rotates the tool holding body 104 of the turret 100 about the axis of rotation R1,
- the motor 36 which drives the feed movement of the tool magazine 30,
- the motor 40 which rotates the tool changing clamp 32 about the axis of rotation R3, and
- the motor 42 and 44 which drive the translational movements of the driving unit 34 associated to the tool changing clamp 32.

As mentioned earlier, the replacement of a tool may become necessary either because the tool has reached a given maximum duration (or number of cycles) of use, and therefore a given maximum level of wear, or because the lathe is to perform a new work cycle that requires one or more tools other than those used in the previous work cycle. In either case, according to the invention the electronic control unit is arranged to perform the tool changing operation, if necessary, only within the time interval in which the work spindle is moved away from the work area to carry out the workpiece loading/unloading operation, and then returned to the work area. For this purpose, the electronic control unit is arranged to carry out, after machining is finished and the machined workpiece has begun to be unloaded, the following operations:
- the new tool is picked up from the tool magazine 30 by the tool changing clamp 32;
- the tool changing clamp 32 is moved from the tool loading/unloading position to the tool changing position;
- the tool holding body 104 of the turret 100 is rotated until the tool to be replaced is in the tool changing position (in the example illustrated the 3 o'clock or 9 o'clock position);
- the tool to be replaced is extracted from the respective tool seat 106 in the tool holding body 104 and inserted into the respective tool seat 38 of the tool changing clamp 32;
- the tool changing clamp 32 is rotated 180°; and
- the new tool is inserted into the tool seat 106 in the tool holding body 24.

The operation of picking up the new tool from the tool magazine 30 can advantageously be done during machining, and hence before the work spindle is moved away from the work area, in order further to speed up the tool changing operation and make sure it is completed before the work spindle is returned to the work area.

As indicated in the introductory part of the description, the electronic control unit is advantageously arranged to count the time and/or the number of cycles of use of each of the tools mounted on the tool holding turret 100 and to determine on each occasion whether, on completion of the machining of a given workpiece, one or more tools will require to be replaced. In this way, therefore, each tool is replaced only when the time (or number of cycles) of use has reached a given maximum value corresponding to the useful life of that tool.

For example, although the invention has been described with specific reference to a lathe fitted with a single work spindle, it is of course also applicable to a lathe fitted with two or more work spindles.

## Claims

1. Numerically controlled lathe (10) comprising:
a tool holding turret (100) arranged to carry a plurality of tools (110, 112);
an automatic workpiece loading/unloading device (14) including at least one work spindle (20) movable between a work area, in which it is located near the tool holding turret (100) and is operable to carry out the cutting and feed movements required by the particular turning operation provided for by the work cycle, and a loading/unloading area remote from the work area, in which it is located remote from the tool holding turret (100) to unload the machined workpiece (P) and to load a new workpiece (P) to be machined and/or to carry out auxiliary operations on the workpiece (P), such as measuring or cleaning operations;
an automatic tool changing device (16) arranged to automatically replace on each occasion one of the tools (110, 112) carried by the tool holding turret (100) with a new tool (110, 112); and
a programmable electronic control unit arranged to control the tool holding turret (100), the automatic workpiece loading/unloading device (14) and the automatic tool changing device (16) so as to carry out each tool changing operation in the time interval in which the work spindle (20) is moved away from the work area to load/unload a workpiece (P) and then returned to the work area,
wherein the tool holding turret (100) comprises a motorized tool holding body (104) which is mounted rotatably about a first, fixed axis of rotation (R1) and has a plurality of tool seats (106), each intended to accommodate and automatically lock a respective tool (110, 112), the electronic control unit being arranged to rotate the tool holding body (104) so as to bring on each occasion the desired tool (110, 112) in a given working position, as well as to bring the tool (110, 112) to be replaced in a given tool changing position, and
wherein the tool holding turret (100) further comprises:
a plurality of tool holding cartridges (108), each carrying a fixed (110) or rotating (112) tool, each housed in a respective tool seat (106) in the tool holding body (104) and each provided with a tightening clamp (164);
first motor means (114, 134) arranged to rotate the tool holding body (104);
second motor means (148, 150, 158, 160, 162) arranged to rotate about a second, fixed axis of rotation (R2) a rotating tool (112) carried by a tool holding cartridge (108) housed in one of the tool seats (106) of the tool holding body (104) when said tool (112) is arranged with its axis approximately aligned with said second axis of rotation (R2); and
automatic tool release means (170) arranged to cooperate with the clamp (164) of a tool holding cartridge (108), when the latter is in a given angular position in the rotary movement of the tool holding body (104) about its axis of rotation (R1), in order to open the clamp (164) and so allow the tool (110, 112) to be extracted from the tool holding cartridge (108).

2. Lathe according to claim 1, wherein the electronic control unit is arranged to count the time and/or the number of cycles of use of each of the tools (110, 112) carried by the tool holding turret (100) and, following the machining of a given workpiece, to command the replacement of only that tool or those tools (110, 112) that has/have reached a time and/or number of cycles of use corresponding to the useful life of that tool or of those tools.

3. Lathe according to claim 1 or claim 2, wherein said at least one work spindle (20) is rotatable about a vertical axis of rotation (Z) and extends down towards the tool holding turret (100) and wherein the automatic workpiece loading/unloading device (14) further comprises motorized driving means (22) arranged to drive said at least one work spindle (22) to translate both in the vertical direction (Z) and in the horizontal direction (X).

4. Lathe according to claim 1, wherein the tools seats (106) are radial seats.

5. Lathe according to claim 4, wherein the first and second axes of rotation (R1, R2) of the tool holding turret (100) are perpendicular to each other.

6. Lathe according to any one of claims 1, 4 or 5, wherein said automatic tool release means (170) of the tool holding turret (100) comprise at least one hydraulic piston (170) arranged to cause a drive rod (156) of the clamp (164) of whichever tool holding cartridge (108) is presented to the hydraulic piston (172) to slide between a normal working position, in which the clamp (164) is closed and the tool (110, 112) is therefore locked in the tool holding cartridge (108), and a tool changing position, in which the clamp (164) is open and the tool (110, 112) can therefore be extracted from the tool holding cartridge (108).

7. Lathe according to claim 6, wherein said automatic tool release means (170) of the tool holding turret (100) comprise two hydraulic pistons (170) arranged on opposite sides of the first axis of rotation (R1) of the tool holding body (104) and operating in opposite directions along the same axis (Y).

8. Lathe according to claim 6 or claim 7, wherein said at least one hydraulic piston (170) is slidably arranged in a direction (Y) perpendicular to the second axis of rotation (R2) of the tool holding body (104).

9. Lathe according to any one or the preceding claims, wherein the automatic tool changing device (16) comprises a tool magazine (30), a tool changing clamp (32) and a driving unit (34), wherein the tool changing clamp (32) has at least a pair of tool seats (38), one intended to receive the old tool (110, 112) and the other the new tool (110, 112) and is rotatable about a horizontal axis of rotation (R3), and wherein the driving unit (34) is arranged to drive the tool changing clamp (32) to translate along a pair of perpendicular directions lying in a horizontal plane between a tool changing position and a tool loading/unloading position.

10. Lathe according to the preceding claims, wherein the electronic control unit is arranged to bring about, during the time interval in which the work spindle (20) is moved away from the work area to load/unload a workpiece (P), and then returned to the work area, the following operations:
- picking up a new tool (110, 112) from the tool magazine (30) by means of the tool changing clamp (32);
- moving the tool changing clamp (32) from the tool loading/unloading position to the tool changing position;
- rotating the tool holding body (104) of the turret (100) until the tool (110, 112) to be replaced is in the tool changing position;
- picking up the tool (110, 112) to be replaced by means of the tool changing clamp (32);
- rotating the tool changing clamp (32) 180° about its axis of rotation (R3); and
- inserting the new tool (110, 112) into the respective tool seat (106) in the tool holding body (104).

## Patentansprüche

1. Numerisch gesteuerte Drehbank (10), die folgende Merkmale aufweist:
einen Werkzeughalte-Revolverkopf (100), der dazu angeordnet ist, eine Mehrzahl von Werkzeugen (110, 112) zu tragen;
eine automatische Werkstücklade-/-entnahmevorrichtung (14), die zumindest eine Arbeitsspindel (20) umfasst, die zwischen einem Arbeitsbereich, in dem sie sich in der Nähe des Werkzeughalte-Revolverkopfes (100) befindet und dazu betreibbar ist, die Schneid- und Zufuhrbewegungen auszuführen, die seitens des jeweiligen Drehvorgangs, der durch den Arbeitszyklus vorgesehen ist, erforderlich sind, und einem Lade-/Entnahmebereich, der von dem Arbeitsbereich entfernt ist, in dem sie sich fern von dem Werkzeughalte-Revolverkopf (100) befindet, um das bearbeitete Werkstück (P) zu entnehmen und ein neues zu bearbeitendes Werkstück (P) zu laden und/oder Hilfsarbeitsgänge an dem Werkstück (P) wie beispielsweise Mess- oder Reinigungsoperationen durchzuführen, bewegbar ist;
eine automatische Werkzeugwechselvorrichtung (16), die dazu angeordnet ist, bei jeder Gelegenheit eines der Werkzeuge (110, 112), die durch den Werkzeughalte-Revolverkopf (100) getragen werden, automatisch gegen ein neues Werkzeug (110, 112) auszutauschen; und
eine programmierbare elektronische Steuereinheit, die dazu angeordnet ist, den Werkzeughalte-Revolverkopf (100), die automatische Werkstücklade-/-entnahmevorrichtung (14) und die automatische Werkzeugwechselvorrichtung (16) dahin gehend zu steuern, jeden Werkzeugwechselvorgang in dem Zeitintervall auszuführen, in dem die Arbeitsspindel (20) von dem Arbeitsbereich weg bewegt wird, um ein Werkstück (P) zu laden/zu entnehmen, und anschließend zu dem Arbeitsbereich zurück bewegt wird,
wobei der Werkzeughalte-Revolverkopf (100) einen motorisierten Werkzeughaltekörper (104) aufweist, der um eine erste, feststehende Drehachse (R1) herum drehbar angeordnet ist und eine Mehrzahl von Werkzeugsitzen (106) aufweist, von denen jeder ein jeweiliges Werkzeug (110, 112) aufnehmen und automatisch verriegeln soll, wobei die elektronische Steuereinheit dazu angeordnet ist, den Werkzeughaltekörper (104) zu drehen, um bei jeder Gelegenheit das gewünschte Werkzeug (110, 112) in eine gegebene Arbeitsposition zu bringen und um das auszutauschende Werkzeug (110, 112) in eine gegebene Werkzeugwechselposition zu bringen, und
wobei der Werkzeughalte-Revolverkopf (100) ferner folgende Merkmale aufweist:
eine Mehrzahl von Werkzeughaltepatronen (108), von denen jede ein feststehendes (110) oder sich drehendes (112) Werkzeug trägt, von denen jede in einem jeweiligen Werkzeugsitz (106) in dem Werkzeughaltekörper (104) untergebracht ist und jede mit einer Feststellklemme (164) versehen ist;
eine erste Motoreinrichtung (114, 134), die dazu angeordnet ist, den Werkzeughaltekörper (104) zu drehen;
eine zweite Motoreinrichtung (148, 150, 158, 160, 162), die dazu angeordnet ist, ein sich drehendes Werkzeug (112), das durch eine Werkzeughaltepatrone (108) getragen wird, die in einem der Werkzeugsitze (106) des Werkzeughaltekörpers (104) untergebracht ist, um eine zweite, feststehende Drehachse (R2) zu drehen, wenn das Werkzeug (112) mit seiner Achse ungefähr mit der zweiten Drehachse (R2) ausgerichtet ist; und
eine automatische Werkzeugfreigabeeinrichtung (170), die dazu angeordnet ist, mit der Klemme (164) einer Werkzeughaltepatrone (108) zusammenzuwirken, wenn sich letztere bei der Drehbewegung des Werkzeughaltekörpers (104) um seine Drehachse (R1) in einer gegebenen Winkelposition befindet, um die Klemme (164) zu öffnen und somit zu ermöglichen, dass das Werkzeug (110, 112) aus der Werkzeughaltepatrone (108) herausgenommen wird.

2. Drehbank gemäß Anspruch 1, bei der die elektronische Steuereinheit dazu angeordnet ist, die Nutzungszeit und/oder die Anzahl der Nutzungszyklen jedes der Werkzeuge (110, 112), die durch den Werkzeughalte-Revolverkopf (100) getragen werden, zu zählen, und im Anschluss an das Bearbeiten eines gegebenen Werkstücks das Austauschen lediglich desjenigen Werkzeugs oder derjenigen Werkzeuge (110, 112) anzuweisen, das/die eine Nutzungszeit und/oder eine Anzahl von Nutzungszyklen erreicht hat/haben, die der Nutzlebensdauer dieses Werkzeugs oder dieser Werkzeuge entspricht beziehungsweise entsprechen.

3. Drehbank gemäß Anspruch 1 oder 2, bei der die zumindest eine Arbeitsspindel (20) um eine vertikale Drehachse (Z) herum drehbar ist und sich nach unten zu dem Werkzeughalte-Revolverkopf (100) hin erstreckt, und bei der die Werkstücklade-/-entnahmevorrichtung (14) ferner eine motorisierte Antriebseinrichtung (22) aufweist, die dazu angeordnet ist, die zumindest eine Arbeitsspindel (22) anzutreiben, sich sowohl in der vertikalen Richtung (Z) als auch in der horizontalen Richtung (X) translatorisch zu bewegen.

4. Drehbank gemäß Anspruch 1, bei der die Werkzeugsitze (106) radiale Sitze sind.

5. Drehbank gemäß Anspruch 4, bei der die erste und die zweite Drehachse (R1, R2) des Werkzeughalte-Revolverkopfes (100) zueinander senkrecht sind.

6. Drehbank gemäß einem der Ansprüche 1, 4 oder 5, bei der die automatische Werkzeugfreigabeeinrichtung (170) des Werkzeughalte-Revolverkopfes (100) zumindest einen Hydraulikkolben (170) aufweist, der dazu angeordnet ist, zu bewirken, dass eine Antriebsstange (156) der Klemme (164) derjenigen Werkzeughaltepatrone (108), die gerade dem Hydraulikkolben (172) präsentiert wird, zwischen einer normalen Arbeitsposition, in der die Klemme (164) geschlossen ist und das Werkzeug (110, 112) somit in der Werkzeughaltepatrone (108) verriegelt ist, und einer Werkzeugwechselposition, in der die Klemme (164) offen ist und das Werkzeug (110, 112) somit aus der Werkzeughaltepatrone (108) herausgenommen werden kann, verschoben wird.

7. Drehbank gemäß Anspruch 6, bei der die automatische Werkzeugfreigabeeinrichtung (170) des Werkzeughalte-Revolverkopfes (100) zwei Hydraulikkolben (170) aufweist, die auf gegenüberliegenden Seiten der ersten Drehachse (R1) des Werkzeughaltekörpers (104) angeordnet sind und in entgegengesetzten Richtungen entlang derselben Achse (Y) wirken.

8. Drehbank gemäß Anspruch 6 oder Anspruch 7, bei der der zumindest eine Hydraulikkolben (170) verschiebbar in einer Richtung (Y) angeordnet ist, die zu der zweiten Drehachse (R2) des Werkzeughaltekörpers (104) senkrecht ist.

9. Drehbank gemäß einem der vorhergehenden Ansprüche, bei der die automatische Werkzeugwechselvorrichtung (16) ein Werkzeugmagazin (30), eine Werkzeugwechselklemme (32) und eine Antriebseinheit (34) aufweist, wobei die Werkzeugwechselklemme (32) zumindest ein Paar Werkzeugsitze (38) aufweist, von denen einer das alte Werkzeug (110, 112) aufnehmen soll und der andere das neue Werkzeug (110, 112) aufnehmen soll und um eine horizontale Drehachse (R3) herum drehbar ist, und bei der die Antriebseinheit (34) dazu angeordnet ist, die Werkzeugwechselklemme (32) anzutreiben, sich entlang eines Paares senkrechter Richtungen, die in einer horizontalen Ebene zwischen einer Werkzeugwechselposition und einer Werkzeuglade-/-entnahmeposition liegen, translatorisch zu bewegen.

10. Drehbank gemäß den vorhergehenden Ansprüchen, bei der die elektronische Steuereinheit dazu angeordnet ist, während des Zeitintervalls, in dem die Arbeitsspindel (20) von dem Arbeitsbereich weg bewegt wird, um ein Werkstück (P) zu laden/zu entnehmen, und anschließend zu dem Arbeitsbereich zurück bewegt wird, folgende Arbeitsgänge zu bewirken:
- Aufgreifen eines neuen Werkzeugs (110, 112) aus dem Werkzeugmagazin (30) mittels der Werkzeugwechselklemme (32);
- Bewegen der Werkzeugwechselklemme (32) von der Werkzeuglade/-entnahmeposition zu der Werkzeugwechselposition;
- Drehen des Werkzeughaltekörpers (104) des Revolverkopfes (100), bis sich das auszutauschende Werkzeug (110, 112) in der Werkzeugwechselposition befindet;
- Aufgreifen des auszutauschenden Werkzeugs (110, 112) mittels der Werkzeugwechselklemme (32);
- Drehen der Werkzeugwechselklemme (32) um 180° um ihre Drehachse (R3); und
- Einführen des neuen Werkzeugs (110, 112) in den jeweiligen Werkzeugsitz (106) in dem Werkzeughaltekörper (104).

## Revendications

1. Tour (10) à commande numérique, comportant :
une tourelle porte-outils (100) conçue pour porter une pluralité d'outils (110, 112) ;
un dispositif de chargement/déchargement automatique (14) de pièce d'usinage comprenant au moins une broche porte-pièce (20) mobile entre une zone de travail, dans laquelle elle se trouve près de la tourelle porte-outils (100) et elle sert à réaliser les mouvements de coupe et d'avance nécessités par l'opération de tournage particulière permise par le cycle d'usinage, et une zone de chargement/déchargement distante de la zone de travail dans laquelle elle se trouve à distance de la tourelle porte-outils (100) pour décharger la pièce d'usinage usinée (P) et charger une nouvelle pièce d'usinage (P) à usiner et/ou réaliser des opérations auxiliaires sur la pièce (P), notamment des opérations de mesure ou de nettoyage ;
un dispositif de changement automatique (16) d'outil conçu pour remplacer automatiquement par un nouvel outil (110, 112), à chaque occasion, l'un des outils (110, 112) portés par la tourelle porte-outils (100) ; et
une unité de commande électronique programmable conçue pour commander la tourelle porte-outils (100), le dispositif de chargement/ déchargement automatique (14) de pièce d'usinage et le dispositif de changement automatique (16) d'outil afin de réaliser chaque opération de changement d'outil pendant le laps de temps durant lequel la broche porte-pièce (20) est écartée de la zone de travail afin de charger/décharger une pièce (P), puis est remise dans la zone de travail,
la tourelle porte-outil (100) comprenant un corps motorisé (104) de serrage d'outils qui est monté de manière à pouvoir tourner autour d'un premier axe de rotation fixe (R1) et ayant une pluralité de logements (106) d'outils destinés chacun à recevoir et à verrouiller automatiquement un outil respectif (110, 112), l'unité de commande électronique étant conçue pour faire tourner le corps (104) de serrage d'outil afin de mettre, à chaque occasion, l'outil voulu (110, 112) dans une position de travail voulue, et aussi de mettre l'outil (110, 112) à remplacer dans une position de changement d'outil donnée, et
la tourelle porte-outils (100) comprenant en outre :
une pluralité de cartouches porte-outils (108) portant chacune un outil fixe (110) ou rotatif (112), logées chacune dans un logement respectif (106) d'outil dans le corps de serrage (104) d'outils et munies chacune d'une pince de serrage (164) ;
des moyens formant premiers moteurs (114, 134) conçus pour faire tourner le corps de serrage (104) d'outils ;
des moyens formant second moteurs (148, 150, 158, 160, 162) conçus pour faire tourner autour d'un second axe de rotation fixe (R2) un outil rotatif (112) porté par une cartouche porte-outil (108) logée dans l'un des logements (106) d'outils du corps de serrage (104) d'outils quand ledit outil (112) est disposé avec son axe approximativement aligné avec ledit second axe de rotation (R2) ; et
un moyen de déverrouillage automatique (170) d'outil conçu pour coopérer avec la pince de serrage (164) d'une cartouche porte-outil (108) quand cette dernière est dans une position angulaire donnée lors du mouvement de rotation du corps de serrage (104) d'outils autour de son axe de rotation (R1), afin d'ouvrir la pince de serrage (164) et de permettre ainsi à l'outil (110, 112) d'être extrait de la cartouche porte-outil (108).

2. Tour selon la revendication 1, dans lequel l'unité de commande électronique est conçue pour compter la durée et/ou de nombre de cycles d'utilisation de chacun des outils (110, 112) portés par la tourelle porte-outils (100) et, à la suite de l'usinage d'une pièce donnée, pour demander uniquement le remplacement de l'outil ou des outils (110, 112) qui a/ont atteint une durée et/ou un nombre de cycles d'utilisation correspondant à la durée de vie de cet outil/ces outils.

3. Tour selon la revendication 1 ou la revendication 2, dans lequel ladite au moins une broche porte-pièce (20) peut tourner autour d'un axe de rotation vertical (Z) et s'étend vers le bas en direction de la tourelle porte-outils (100), et dans lequel le dispositif de chargement/déchargement automatique (14) de pièce à usiner comprend en outre des moyens d'entraînement motorisés (22) conçus pour entraîner ladite au moins une broche porte-pièce (22) afin qu'elle se déplace à la fois verticalement (direction Z) et horizontalement (direction X).

4. Tour selon la revendication 1, dans lequel les logements (106) d'outils sont des logements radiaux.

5. Tour selon la revendication 4, dans lequel les premier et second axes de rotation (R1, R2) de la tourelle porte-outils (100) sont perpendiculaires l'un à l'autre.

6. Tour selon l'une quelconque des revendications 1, 4 et 5, dans lequel ledit moyen de déverrouillage automatique (170) d'outil de la tourelle porte-outil (100) comprend au moins un piston hydraulique (170) conçu pour amener une tige d'entraînement (156) de la pince de serrage (164) de quelque cartouche porte-outil (108) que ce soit qui est présentée au piston hydraulique (172) à coulisser entre une position de travail normale, dans laquelle la pince de serrage (164) est fermée et l'outil (110, 112) est donc verrouillé dans la cartouche porte-outil (108), et une position de changement d'outil, dans laquelle la pince de serrage (164) est ouverte et l'outil (110, 112) peut donc être extrait de la cartouche porte-outil (108).

7. Tour selon la revendication 6, dans lequel ledit moyen de déverrouillage automatique (170) d'outil de la tourelle porte-outils (100) comprend deux pistons hydrauliques (170) disposés de part et d'autre du premier axe de rotation (R1) du corps de serrage (104) d'outil et fonctionnant dans des directions opposées sur le même axe (Y).

8. Tour selon la revendication 6 ou la revendication 7, dans lequel ledit au moins un piston hydraulique (170) est conçu pour pouvoir coulisser dans une direction (Y) perpendiculaire au second axe de rotation (R2) du corps de serrage (104) d'outil.

9. Tour selon l'une quelconque des revendications précédentes, dans lequel le dispositif de changement automatique (16) d'outil comprend un magasin (30) d'outils, une pince (32) de changement d'outil et une unité d'entraînement (34), la pince (32) de changement d'outil a au moins une paire de logements (38) d'outils, l'un étant destiné à recevoir l'ancien outil (110, 112) et l'autre le nouvel outil (110, 112), et peut tourner autour d'un axe de rotation horizontal (R3), et dans lequel l'unité d'entraînement (34) est conçue pour entraîner la pince (32) de changement d'outil en mouvement dans une paire de directions perpendiculaires situées dans un plan horizontal entre une position de changement d'outil et une position de chargement/déchargement d'outil.

10. Tour selon les revendications précédentes, dans lequel l'unité de commande électronique est conçue pour provoquer, pendant le laps de temps durant lequel la broche porte-pièce (20) est écartée de la zone de travail pour charger/décharger une pièce (P), puis remise dans la zone de travail, les opérations suivantes :
- prélèvement d'un nouvel outil (110, 112) dans le magasin (30) d'outils à l'aide de la pince (32) de changement d'outil ;
- passage de la pince (32) de changement d'outil de la position de chargement/déchargement d'outil à la position de changement d'outil ;
- rotation du corps de serrage (104) d'outil de la tourelle (100) jusqu'à ce que l'outil (110, 112) à remplacer soit dans la position de changement d'outil ;
- prélèvement de l'outil (110, 112) à remplacer à l'aide de la pince (32) de changement d'outil ;
- rotation de la pince (32) de changement d'outil sur 180° autour de son axe de rotation (R3) ; et
- insertion du nouvel outil (110, 112) dans le logement d'outil respectif (106) dans le corps de serrage (104) d'outil.
